# EUROPÄISCHE PATENTSCHRIFT

(11) **EP 2 030 669 B1**
(45) Veröffentlichungstag und Bekanntmachung des Hinweises auf die Patenterteilung: **02.04.2014**
(21) Anmeldenummer: 08157152.3
(22) Anmeldetag: 29.05.2008
(51) Int. Cl.: B01D 67/00, B01D 53/22, B01D 71/02, C04B 35/50

(54) **Verfahren zum Herstellen einer wasserstoffpermeablen Membran sowie wasserstoffpermeable Membran**
Method for manufacturing a hydrogen-permeable membrane and hydrogen-permeable membrane
Procédé pour la fabrication d'une membrane perméable à l'hydrogène tout comme membrane perméable à l'hydrogène

(30) Priorität: 16.08.2007 EP 07114428
(43) Veröffentlichungstag der Anmeldung: 04.03.2009
(73) Patentinhaber: Sulzer Metco AG, 5610 Wohlen (CH)
(72) Erfinder: Damani, Rajiv J., Dr., 8404 Winterthur (CH); Refke, Arno, Dr., 5507 Mellingen (CH)
(74) Vertreter: Intellectual Property Services GmbH

(56) Entgegenhaltungen:
- EP-A1- 1 338 671
- WO-A-00/68139
- WO-A1-03/087422
- US-A1- 2006 275 205

## Beschreibung

Die Erfindung betrifft ein Verfahren zum Herstellen einer wasserstoffpermeabeln Membran gemäss dem Oberbegriff des unabhängigen Verfahrensanspruchs und ferner eine wasserstoffpermeable Membran.

Wasserstoffpermeable Membrane sind Schichten, die eine hohe selektive Permeabilität für Wasserstoff aufweisen und für andere Gase im Wesentlichen undurchlässig sind. Dementsprechend werden solche Membrane genutzt, um Wasserstoff aus Gas- oder Fluidgemischen zu extrahieren.

Globale Umweltbelange und die knapper werdenden Erdölvorkommen haben dazu geführt, dass grosse Anstrengungen unternommen werden, andere Formen der Gewinnung elektrischer Energie zu entwickeln und auch im Transportwesen unter ökologischen und ökonomischen Aspekten brauchbare Alternativen zu den klassischen Verbrennungsmotoren, die mit erdölbasierten Brennstoffen arbeiten, zu entwickeln. Wichtige Themen sind hier die Reduktion der Emission umweltbelastender Stoffe wie beispielsweise Kohlendioxid und Energiegewinnung aus regenerativen Quellen.

Bei diesen Entwicklungen wird Wasserstoff eine grosse Bedeutung beigemessen sowohl im Hinblick auf die Erzeugung elektrischer Energie als auch im Transportwesen. Aber auch in vielen anderen chemischen Prozessen wird Wasserstoff benötigt, beispielsweise bei der Herstellung flüssiger Kohlenwasserstoffe nach dem Fischer-Tropsch-Verfahren, bei der direkten Kohleverflüssigung oder in der Erdölraffinerie.

Andererseits gibt es viele Prozesse, bei denen Wasserstoff entsteht, beispielsweise bei der Verbrennung erdöl- oder erdgasbasierter Materialien bzw. bei der Dampfreformierung oder der katalytischen Reformierung. Typischerweise tritt dabei jedoch der Wasserstoff zusammen mit anderen Gasen oder Verbrennungsgasen auf, beispielsweise in Kombination mit Kohlendioxid, und muss daher erst aus dem Gasgemisch extrahiert werden, um verwendet werden zu können.

Hierzu sind unter anderem Membrane bekannt, die selektiv für Wasserstoff durchlässig sind. Zum einen gibt es metallische Membrane. In der Regel bestehen diese aus Palladium-Legierungen, die eine hohe selektive Durchlässigkeit für Wasserstoff aufweisen. Zum anderen sind keramische Membrane bekannt, die aus Oxiden vom Perowskit-Typ bestehen, beispielsweise BaCe₁₋ₓMₓO₃, wobei M ein zudotiertes Metall wie Y bezeichnet. Diese keramischen Membrane sind Ionenleiter und weisen insbesondere eine hohe Protonenleitfähigkeit aus. Jedoch ist ihre Elektronenleitfähigkeit im Allgemeinen nicht ausreichend, um für industrielle Anwendungen genügend grosse Wasserstoffdurchflussraten zu erzielen.

Es sind daher Kompositmembranen vorgeschlagen worden, die sowohl eine protonenleitende keramische Komponente enthalten als auch eine gut elektronenleitende metallische Komponente. Derartige Membrane werden auch als Cermet (CERamic METal)-Membrane bezeichnet. Solche zweiphasigen wasserstoffpermeable Membrane sind beispielsweise in der US-A-6,235,417 oder in der US-A-6,569,226 beschrieben. Zur Herstellung der Membrane offenbart die US-A-6,235,417 beispielsweise das Beschichten eines geeigneten keramischen Pulvers mit Palladium durch chemische Abscheidung aus der Dampfphase (CVD chemical vapor deposition) oder das Nassimprägnieren des keramischen Pulvers mit einer Palladiumchloridlösung und anschliessendes Trocknen, Kalzinieren, Pressen und Sintern.

Aus der EP 1 338 671 A1 ist eine wasserstoffpermeable Membran bekannt, die mittels Plasmaspritzens hergestellt wird. Dabei wird durch Plasmasprühabscheidung eine mikrorissfreie Beschichtung auf einem Substrat hergestellt, wobei ein Ausgangsmaterial bei Drücken von mindestens 207.000 Pa (entsprechend 30 Psi) auf eine Oberfläche eines Substrats aufgespritzt wird.

Aus der WO 03/087422 A1 ist ein Plasmaspritzverfahren bekannt, mit welchem eine Wärmedämmschicht hergestellt wird, wobei ein einphasiges Beschichtungsmaterial verwendet wird.

Aus der WO 00/68139 A1 ist ein Verfahren zum Herstellen einer Membran mittels Plasmaspritzens bekannt. Bei diesem Verfahren wird ein Ausgangsmaterial in Form eines Prozessstrahls bei Drücken von mindestens 103.500 Pa (entsprechend 15 Psi) auf eine Oberfläche eines Substrats in Form eines porösen Trägers aufgespritzt.

Ausgehend von diesem Stand der Technik, ist es eine Aufgabe der Erfindung, ein anderes Verfahren vorzuschlagen, zum Herstellen einer wasserstoffpermeablen Membran, welche ein protonenleitendes keramisches Material und eine elektronenleitende metallische Komponente umfasst. Die Membran soll eine hohe Protonen- und Elektronenleitfähigkeit besitzen, sodass ausreichende Wasserstoffdurchflussraten erzielbar sind. Ferner soll durch die Erfindung eine entsprechende wasserstoffpermeable Membran vorgeschlagen werden.

Die diese Aufgabe lösenden Gegenstände der Erfindung sind durch die unabhängigen Ansprüche der jeweiligen Kategorie gekennzeichnet.

Erfindungsgemäss wird also ein Verfahren vorgeschlagen zum Herstellen einer wasserstoffpermeablen Membran, welche ein protonenleitendes keramisches Material und eine elektronenleitende metallische Komponente umfasst. Die Membran wird mittels Plasmaspritzens als Schicht auf einem Substrat abgeschieden, wobei ein Ausgangsmaterial in Form eines Prozessstrahls auf eine Oberfläche des Substrats aufgespritzt wird, wobei das Ausgangsmaterial bei einem niedrigen Prozessdruck, der höchstens 10 000 Pa ist, in ein den Prozessstrahl defokussierendes Plasma injiziert und dort teilweise oder vollständig geschmolzen.

Überraschenderweise hat sich gezeigt, dass sich mittels eines solchen Plasmaspritzverfahrens, mit welchem sehr dichte und dünne Schichten auf dem Substrat erzeugbar sind, eine wasserstoffpermeable Membran erzeugen lässt, deren Protonen- und Elektronenleitfähigkeit so gross ist, dass sich damit beträchtliche Durchflussraten für Wasserstoff von beispielsweise mehr als 10 Milliliter pro minute und Quadratzentimeter erzielen lassen.

Vorzugsweise wird ein Plasmaspritzverfahren verwendet, bei dem eine im Vergleich zu konventionellen Plasmaspritzverfahren sehr lange Plasmaflamme generiert wird. Die Spritzdistanz zwischen einer Austrittsdüse für den Prozessstrahl und dem Substrat beträgt dann mindestens 200 mm und vorzugsweise mindestens 400 mm. Dadurch ist die Verweilzeit des Materials in der Plasmaflamme deutlich erhöht, woraus ein höherer Energieübertrag vom Plasma auf das Material resultiert, der sich sehr vorteilhaft auf die Bildung einer dünnen und dichten Schicht auf dem Substrat auswirkt.

Das keramische Material ist vorzugsweise ein Oxid vom Perowskit-Typ, weil sich diese in der Praxis als sehr gute Protonenleiter erwiesen haben.

Insbesondere ist es bevorzugt, wenn das keramische Material vom Perowskit-Typ die Form ABO₃ hat, wobei A aus der Gruppe gewählt wird, die aus Barium (Ba), Calcium (Ca), Magnesium (Mg) und Strontium (Sr) besteht und B die Form CeₓZr_{y}M_{1-x-y} wobei x und y jeweils kleiner oder gleich 1 und grösser oder gleich Null sind und M aus der Gruppe gewählt wird, die aus Yttrium (Y), Ytterbium (Yb), Europium (Eu), Gadolinium (Gd), Indium (In), Neodym (Nd), Thulium (Tm), Holmium (Ho), Rhodium (Rh), Samarium (Sm), Titan (Ti) und Scandium (Sc) besteht. Das heisst, die Komponente B der Perowskitartigen Keramik ist vorzugsweise entweder nur Cer oder nur Zirconium oder eine Mischung aus Zirconium und Cer. Letztere ist beispielsweise durch eine feste Lösung von BaZrO₃ und BaCeO₃ realisierbar.

Die metallische Komponente ist vorzugsweise eines der Metalle Palladium (Pd), Vanadium (V), Niob (Nb), Tantal (Ta) oder Zirconium (Zr), oder eine Legierung mindestens einer dieser Metalle. Insbesondere hat sich Tantal bewährt. Durch diese metallischen Komponenten lässt sich die Elektronenleitfähigkeit der Membran deutlich verbessern. Insbesondere bewährt haben sich Palladiumlegierungen, speziell mit Gold (Au), Kupfer (Cu) oder Silber (Ag) oder auch Tantallegierungen.

Um besonders dichte Schichten zu realisieren, hat es sich als vorteilhaft erwiesen wenn der Prozessdruck im Plasmaspritzverfahren mindestens 10 Pa beträgt und vorzugsweise 50 Pa bis 1000 Pa.

Die Gesamtflussrate des Prozessgases beim Plasmaspritzen ist vorzugsweise kleiner als 200 SLPM (Standardliter pro Minute) und beträgt besonders bevorzugt 60 bis 180 SLPM.

Bezüglich der Zuführraten des pulverförmigen Ausgangsmaterials hat es sich in der Praxis bewährt, wenn für den Prozessstrahl eine Zuführrate von 10 bis 200 g/min, vorzugsweise von 40-120 g/min gewählt wird.

Das Ausgangsmaterial zum Herstellen einer wasserstoffpermeablen Membran nach dem erfindungsgemässen Verfahren enthält ein protonenleitendes keramisches Material und eine elektronenleitende metallische Komponente. Dieses Ausgangsmaterial ist ein Pulver oder eine Pulvermischung, das bzw. die mittels Plasmaspritzens auf einem Substrat abgeschieden werden kann.

In analoger Weise wie für das erfindungsgemässe Verfahren erläutert, ist das keramische Material des Ausgangsmaterials ein Oxid vom Perowskit-Typ.

Vorzugsweise hat bei dem Ausgangsmaterial das keramische Material vom Perowskit-Typ die Form ABO₃, wobei A aus der Gruppe gewählt wird, die aus Barium (Ba), Calcium (Ca), Magnesium (Mg) und Strontium (Sr) besteht und B die Form CeₓZr_{y}M_{1-x-y} wobei x und y jeweils kleiner oder gleich 1 und grösser oder gleich Null sind und M aus der Gruppe gewählt wird, die aus Yttrium (Y), Ytterbium (Yb), Europium (Eu), Gadolinium (Gd), Indium (In), Neodym (Nd), Thulium (Tm), Holmium (Ho), Rhodium (Rh), Samarium (Sm), Titan (Ti) und Scandium (Sc) besteht.

Bevorzugt ist bei dem Ausgangsmaterial die metallische Komponente eines der Metalle Palladium (Pd), Vanadium (V), Niob (Nb), Tantal (Ta) oder Zirconium (Zr) ist, oder eine Legierung mindestens einer dieser Metalle. Besonders bevorzugt handelt es sich um eine Palladiumlegierung, Tantal oder eine Tantallegierung.

Durch die Erfindung wird ferner eine wasserstoffpermeable Membran vorgeschlagen, welche ein protonenleitendes keramisches Material und eine elektronenleitende metallische Komponente umfasst, und mittels Plasmaspritzens als Schicht auf einem Substrat abgeschieden wird. Ein Ausgangsmaterial wird in Form eines Prozessstrahls auf eine Oberfläche des Substrats aufgespritzt und das Ausgangsmaterial bei einem niedrigen Prozessdruck, der höchstens 10 000 Pa ist, in ein den Prozessstrahl defokussierendes Plasma injiziert und dort teilweise oder vollständig geschmolzen wird. Eine Schichtdicke der Schicht liegt zwischen 5 und 20 µm.

Ferner wird ein Substrat mit einer erfindungsgemässen wasserstoffpermeablen Membran vorgeschlagen, wobei das Substrat insbesondere plattenförmig oder rohrförmig ausgestaltet ist. Die planare plattenförmige Ausgestaltung des Substrats zeichnet sich insbesondere durch die einfache Herstellung aus, während die rohrförmige Ausgestaltung den Vorteil einer besonders grossen Membranoberfläche bezogen auf das umschlossene Volumen hat.

Weitere vorteilhafte Massnahmen und bevorzugte Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen teilweise im Schnitt:
- Fig. 1: eine schematische Darstellung einer Vorrichtung zur Durchführung eines erfindungsgemässen Verfahrens,
- Fig. 2: eine sehr schematische Schnittdarstellung eines Ausführungsbeispiels einer erfindungsgemässen wasserstoffpermeablen Membran auf einem plattenförmigen Substrat,
- Fig. 3: eine schematische Darstellung zweier benachbarter Spritzer in der Schicht aus Fig. 2, und
- Fig. 4: eine schematische Schnittdarstellung eines Ausführungsbeispiels einer erfindungsgemässen wasserstoffpermeablen Membran auf einem rohrförmigen Substrat.

Das erfindungsgemässe Verfahren zum Herstellen einer selektiv für Wasserstoff permeablen Membran, die zwei Phasen umfasst, nämlich ein protonenleitendes keramisches Material und eine elektonenleitende metallische Komponente, ist insbesondere dadurch gekennzeichnet, dass die Membran mittels eines Plasmaspritzens generiert wird, mit welchem eine dichte Mikrostruktur erzeugbar ist.

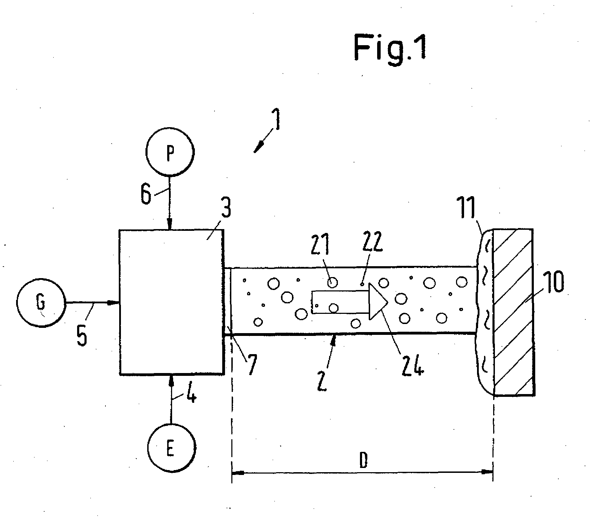

Fig. 1 zeigt in einer sehr schematischen Darstellung eine Plasmaspritzvorrichtung, die gesamthaft mit dem Bezugszeichen 1 bezeichnet ist, und die zur Durchführung eines erfindungsgemässen Verfahrens geeignet ist. Zudem ist in Figur 1 schematisch ein Substrat 10 dargestellt, auf welchem eine wasserstoffpermeable Membran in Form einer Schicht 11 abgeschieden wird.

Das erfindungsgemässe Verfahren umfasst vorzugsweise ein Plasmaspritzen, welches gattungsgemäss in der WO-A-03/087422 oder auch in der US-A-5,853,815 beschrieben ist. Dieses Plasmaspritzverfahren ist ein thermisches Spritzen zur Herstellung eines sogenannten LPPS-Dünnfilms (LPPS = Low Pressure Plasma Spraying).

Speziell wird mit der in Fig. 1 dargestellten Plasmaspritzvorrichtung 1 ein LPPS-Dünnfilm-Prozess (LPPS-TF = LPPS Thin Film) durchgeführt. Bei diesem wird ein konventionelles LPPS-Plasmaspritzverfahren verfahrenstechnisch abgewandelt, wobei ein von Plasma durchströmter Raum ("Plasmaflamme" oder "Plasmastrahl") aufgrund der Änderungen ausgeweitet und auf eine Länge von bis zu 2.5 m ausgedehnt wird. Die geometrische Ausdehnung des Plasmas führt zu einer gleichmässigen Aufweitung - einer "Defokussierung" - eines Prozessstrahls, der mit einem Fördergas in das Plasma injiziert wird. Das Material des Prozessstrahls, das im Plasma zu einer Wolke dispergiert und dort teilweise oder vollständig geschmolzen wird, gelangt gleichmässig verteilt auf die Oberfläche des Substrats 10.

Die in Fig. 1 dargestellte Plasmaspritzvorrichtung 1 umfasst einen an sich bekannten Plasmagenerator 3 mit einem nicht näher dargestellten Plasmabrenner zur Erzeugung eines Plasmas. In an sich bekannter Weise wird mit dem Plasmagenerator 3 aus einem Ausgangssmaterial P, einem Prozessgasgemisch G und elektrischer Energie E ein Prozessstrahl 2 erzeugt. Die Einspeisung dieser Komponenten E, G und P ist in Fig. 1 durch die Pfeile 4, 5, 6 symbolisiert. Der erzeugte Prozessstrahl 2 tritt durch eine Austrittsdüse 7 aus und transportiert das Ausgangssmaterial P in Form des Prozessstrahls 2 in dem Materialpartikel 21,22 in einem Plasma dispergiert sind. Dieser Transport ist durch den Pfeil 24 symbolisiert. Durch die unterschiedlichen Materialpartikel 21,22 soll angedeutet werden, dass zumindest ein keramisches Material 21 als auch eine metallische Komponente 22 im Prozessstrahl 2 enthalten sind. Die Materialpartikel 21, 22 sind in der Regel Pulverpartikel. Die Morphologie der auf dem Substrat 10 abgeschiedenen Schicht 11 ist von den Prozessparametern abhängig und insbesondere vom Ausgangsmaterial P, der Prozessenthalpie und der Temperatur des Substrats 10.

Bei dem hier beschriebenen LPPS-TF-Prozess wird bei einem niedrigen Prozessdruck, der höchstens 10 000 Pa und vorzugsweise höchstens 1000 Pa ist, das Ausgangsmaterial P in ein den Materialstrahl defokussierendes Plasma injiziert und darin teilweise oder vollständig geschmolzen oder zumindest plastisch gemacht. Dazu wird ein Plasma mit ausreichend hoher spezifischer Enthalpie erzeugt, so dass eine sehr dichte und dünne Schicht 11 auf dem Substrat entsteht. Die Variation der Gefüge sind durch die Beschichtungsbedingungen, insbesondere von ProzessEnthalpie, Arbeitsdruck in der Beschichtungskammer sowie den Prozessstrahl wesentlich beeinflusst und steuerbar. Somit hat der Prozessstrahl 2 Eigenschaften, die durch steuerbare Prozessparameter bestimmt werden.

Zur Herstellung der wasserstoffpermeablen Membran wird die Schicht 11 so erzeugt, dass sie eine sehr dichte Mikrostruktur aufweist, was weiter hinten noch erklärt wird.

Zunächst wird nun der Verfahrensschritt des Erzeugens der Schicht 11 mittels LPPS-TF näher erläutert.

Als Ausgangsmaterial P wird ein Pulver geeigneter Zusammensetzung gewählt, wie dies weiter hinten noch erläutert wird. Hierbei ist es eine Möglichkeit, dass das Ausgangsmaterial P in Form eines einzigen Pulvers vorliegt, welches sowohl das keramische Material als auch die metallische Komponente enthält. Eine andere Möglichkeit besteht darin, als Ausgangsmaterial zwei unterschiedliche pulverförmige Materialien zu verwenden, von denen das eine das keramische Material enthält und das andere die metallische Komponente enthält. Diese beiden Materialien können entweder gleichzeitig über zwei verschiedene Pulverzuführungen oder auch zeitlich nacheinander in die Plasmaflamme injiziert werden.

Wie bereits erwähnt, ist beim LPPS-TF-Verfahren die Plasmaflamme aufgrund der eingestellten Prozessparameter im Vergleich zu konventionellen Plasmaspritzverfahren sehr lang. Zudem ist die Plasmaflamme stark aufgeweitet. Es wird ein Plasma mit hoher spezifischer Enthalpie erzeugt, wodurch eine hohe Plasmatemperatur resultiert. Durch die hohe Enthalpie und die Länge bzw die Grösse der Plasmaflamme bedingt kommt es zu einem sehr hohen Energieeintrag in die Materialpartikel 21, 22, die dadurch zum einen stark beschleunigt und zum anderen auf eine hohe Temperatur gebracht werden, sodass sie sehr gut aufschmelzen und auch noch nach ihrer Deposition auf dem Substrat 10 sehr heiss sind. Da andererseits die Plasmaflamme und damit der Prozessstrahl 2 sehr stark aufgeweitet ist, ist der lokale Wärmefluss in das Substrat 10 gering, sodass eine thermische Schädigung des Materials vermieden wird. Die aufgeweitete Plasmaflamme hat ferner zur Folge, dass üblicherweise beim einmaligen Überstreichen des Substrat 10 mit dem Prozessstrahl 2 die Materialpartikel 21, 22 in Form einzelner Spritzer (Splats) deponiert werden, die noch keine durchgehende, d.h. zusammenhängende Schicht erzeugen. Dadurch sind sehr dünne Schichten 11 herstellbar. Die hohe kinetische und thermische Energie, welche die Materialpartikel bei ihrem im Vergleich zu konventionellen Plasmaspritzverfahren langen Aufenthalt in der Plasmaflamm erhalten, begünstigen die Ausbildung einer sehr dichten Schicht 11, die insbesondere wenige Grenzflächenhohlräume zwischen aufeinanderliegenden Spritzern aufweist.

Das Plasma wird beispielsweise in einem an sich bekannten Plasmabrenner im Plasmagenerator 3 mit einem elektrischen Gleichstrom und mittels einer Stiftkatode sowie einer ringförmigen Anode erzeugt. Die dem Plasma zugeführte Leistung, die effektive Leistung, kann empirisch bezüglich der resultierenden Schichtstruktur ermittelt werden. Die effektive Leistung, die durch die Differenz zwischen der elektrischen Leistung und der durch Kühlung abgeführten Wärme gegeben ist, liegt erfahrungsgemäss z. B. im Bereich von 40 bis 80 kW. Hierzu hat es sich bewährt, wenn der elektrische Strom für die Plasmaerzeugung zwischen 1000 und 3000 A liegt, insbesondere zwischen 1500 und 2600 A.

Für den Prozessdruck des LPPS-TF-Plasmaspritzens zum Erzeugen der wasserstoffpermeablen Membran wird in der Prozesskammer ein Wert zwischen 10 und 10000 Pa gewählt, vorzugsweise zwischen 100 und 1000 Pa.

Das Ausgangsmaterial P wird als Pulverstrahl mit einem Fördergas, vorzugsweise Argon oder ein Helium-Argon-Gemisch in das Plasma injiziert. Die Flussrate des Fördergases beträgt vorzugsweise 5 bis 40 SLPM (Standard Litre Per Minute), insbesondere 10 bis 25 SLPM.

Das Prozessgas für die Erzeugung des Plasmas ist vorzugsweise ein Gemisch von Inertgasen, insbesondere eine Gemisch von Argon Ar, Wasserstoff H und Helium He. In der Praxis haben sich die folgenden Gasflussraten für das Prozessgas besonders bewährt:
Ar-Flussrate: 30 bis 150 SLPM, insbesondere 50 bis 100 SLPM
H₂-Flussrate: Null bis 20 SLPM, insbesondere 2 bis 10 SLPM
He-Flussrate: Null bis 150 SLPM, insbesondere 20 bis 100 SLPM,
wobei die Gesamtflussrate des Prozessgases vorzugsweise kleiner als 200 SLPM ist und insbesondere 60 bis 180 SLPM beträgt.

Die Pulverförderrate mit der das Ausgangsmaterial P gefördert wird, liegt insbesondere zwischen 10 und 200 g/min, vorzugsweise zwischen 40 und 120 g/min.

Es kann vorteilhaft sein, wenn das Substrat während des Materialauftrags mit Dreh- oder Schwenkbewegungen relativ zu dieser Wolke bewegt wird. Natürlich ist es auch möglich, den Plasmagenerator 3 relativ zum Substrat 10 zu bewegen.

Die Spritzdistanz, das heisst der Abstand D zwischen der Austrittsdüse 7 und dem Substrat 10 beträgt vorzugsweise 200 bis 2000 mm und insbesondere 400 bis 1000 mm.

Durch dieses Plasmaspritzen wird die wasserstoffpermeable Membran - typischerweise durch Abscheiden einer Mehrzahl von Lagen - aufgebaut. Hierbei wird eine möglichst dichte Struktur und eine dünne Schicht hergestellt.

Die gesamte Schichtdicke der Membran beträgt vorzugsweise 5 µm bis 10 µm.

Damit im Prozessstrahl 2 die Materialpartikel 21,22 sehr gut aufschmelzen und eine hohe thermische und kinetisache Energie bekommen, um die Schicht 11 mit der dichten Struktur zu erzeugen, ist das pulverförmige Ausgangsmaterial P vorteilhafterweise sehr feinkörnig. Die Grössenverteilung der Pulverpartikel im Ausgangsmaterial P wird mittels einer Laserstreumethode bestimmt. Für diese Grössenverteilung gilt vorteilhafterweise, dass sie zu einem wesentlichen Teil im Bereich zwischen 1 und 80, vorzugsweise zwischen 5 und 45 µm liegt.

Zur Herstellung der Pulverpartikel können verschiedene Verfahren angewendet werden: beispielsweise Sprühtrocknen oder eine Kombination von Aufschmelzen und anschliessendem Brechen und/oder Mahlen der erstarrten Schmelze.

Das Ausgangsmaterial P liegt vorzugsweise als Pulver in Form einer Mischung (Blend) vor. Diese Pulvermischung enthält das protonenleitende keramische Material und die metallische Komponente. Das keramische Material ist vorzugsweise ein Oxid vom Perowskit-Typ und hat die Form ABO₃. Dabei bezeichnet A ein Element, das aus der Gruppe gewählt wird, die aus Barium (Ba), Calcium (Ca), Magnesium (Mg) und Strontium (Sr) besteht. B hat die Form CeₓZr_{y}M_{1-x-y} wobei x und y jeweils kleiner oder gleich 1 und grösser oder gleich Null sind und M aus der Gruppe gewählt wird, die aus Yttrium (Y), Ytterbium (Yb), Europium (Eu), Gadolinium (Gd), Indium (In), Neodym (Nd), Thulium (Tm), Holmium (Ho), Rhodium (Rh), Samarium (Sm), Titan (Ti) und Scandium (Sc) besteht. Hierbei können x und y auch den Wert Null annehmen, wobei jedoch x und y nicht gleichzeitig den Wert Null annehmen. Das heisst, der Bestandteil B kann entweder beide Elemente Ce und Zr enthalten oder nur eines der beiden Elemente Ce und Zr. Das zudotierte Element M ist vorzugsweise mit einem Anteil von höchsten 0.4 in B enthalten, d.h. 1-x-y ist kleiner oder gleich 0.4.

Ein wesentlicher Aspekt, unter dem die konkrete Zusammensetzung der keramischen Komponente ausgewählt wird, ist eine sehr gute bzw. sehr hohe Protonenleitfähigkeit. Beispielsweise kann die keramische Komponente die folgenden Zusammensetzungen haben:

| | |
|---|---|
| BaCe_{0.8}Gd_{0.2}O₃ | BaCe_{0.95}Y_{0.05}O₃ |
| BaCe_{0.9}Nd_{0.1}O₃ | BaCe_{0.95}Gd_{0.05}O₃ |
| SrCe_{0.95}Tm_{0.05}O₃ | BaZr_{0.95}Rh_{0.05}O₃ |
| SrCe_{0.95}Y _{0.05}O₃ | SrZr_{0.95}Yb_{0.05}O₃ |
| SrCe_{0.95}Ho_{0.05}O₃ | SrCe_{0.95}Y_{0.05}O₃ |
| SrZr_{0.5}Y_{0.05}O₃ | SrCe_{0.95}SC_{0.05}O₃ |
| CaZr_{0.9}In_{0.1}O₃ | BaCe_{0.85}Eu_{0.15}O₃ |
| BaCe_{0.5}Zr_{0.4}Y_{0.1}O₃ | BaCe_{0.6}Zr_{0.2}Y_{0.2}O₃ |

Neben der Ionenleitfähigkeit, speziell der Protonenleitfähigkeit, soll die keramische Komponente auch mechanische Stärke bzw. Stabilität aufweisen, um dann insbesondere als Gerüst zu dienen, welches die Membrane stützt und ein Kriechen des Materials verhindert.

Die elektronenleitende metallische Komponente ist in einer bevorzugten Ausführungsform eine Palladium (Pd) Legierung und speziell eine Palladium-Gold-Legierung, eine Palladium-Kupfer-Legierung oder eine Palladium-SilberLegierung. Pd-Legierungen weisen eine gute selektive Permeabilität für Wasserstoff in atomarer Form auf und haben zudem eine sehr gute elektronische Leitfähigkeit. Weitere bevorzugte Materialien für die metallische Komponente sind Vanadium (V), Niob (Nb), Tantal (Ta), Zirconium (Zr), oder eine Legierung, die mindestens eines dieser Metalle enthält. Insbesondere bevorzugt sind ferner Tantal oder eine Tantallegierung als metallische Komponente

Neben der Elektronenleitfähigkeit ist es ferner die Aufgabe der metallischen Komponente, der Membrane Duktilität sowie eine gute Permeabilität für atomaren bzw. ionischen Wasserstoff zu verleihen.

Die Wahl geeigneter Partner für das keramische Material einerseits und die metallische Komponente andererseits, erfolgt unter Berücksichtigung der thermischen Eigenschaften der beiden Partner. Da wasserstoffpermeable Membrane häufig bei Betriebstemperaturen von 650°C bis 900°C eingesetzt werden, sollten die thermischen Eigenschaften so zueinander passen, dass es nicht zu einem gegenseitigen Sprengen kommt, beispielsweise durch stark unterschiedliche thermische Dehnungen.

Ferner soll die wasserstoffpermeable Membran auch langfristig chemisch stabil sein, speziell in reduzierenden Umgebungen, beispielsweise in Umgebungen, die CO₂, H₂O, CO oder Schwefel enthalten - um nur ein paar Beispiele zu nennen.

Je nach Anwendungsfall ist ein weiterer Aspekt bei der Auswahl der geeigneten keramischen und metallischen Komponente, dass die Membrane auch chemisch stabil sein muss bei zyklisch wechselnden reduzierenden und oxidierenden Atmosphären.

Es versteht sich das auch mehrere verschiedene keramische Materialien und/oder mehrere verschiedene elektronenleitende metallische Komponenten für die Herstellung der wasserstoffpermeablen Membran verwendet werden können.

Das protonenleitende keramische Material und die elektronenleitende metallische Komponente werden als Ausgangsmaterial P für das Plasmaspritzen verwendet. Eine Möglichkeit besteht darin, das keramische Material und die metallische Komponente in Form einer Pulvermischung (blend) bereitzustellen, die in dem Plasmaspritzprozess verarbeitet werden kann. Für den LPPS-TF-Prozess sollte dabei - wie bereits erwähnt - die Grössenverteilung der Partikel im Pulver so sein, dass sie zu einem wesentlichen Teil im Bereich zwischen 1 und 80 µm liegt. Zur Herstellung des pulverförmigen Ausgangsmaterials eignen sich an sich bekannte Methoden wie beispielsweise das Sprühtrocknen.

Wird als keramische Komponente eine solche gewählt, bei der sowohl Cer als auch Zirkonium in der Komponente B der Verbindung ABO₃ enthalten sind, so kann diese keramische Komponente durch eine feste Lösung von BaZrO3 und BaCeO3 hergestellt werden, die dann noch mit einem der Elemente M dotiert wird.

Zur Herstellung eines Ausgangsmaterials P, das sowohl die keramische als auch die metallische Komponente enthält, ist es auch möglich, das keramische Material in Pulverform mit der metallischen Komponente zu beschichten (cladding), sodass die einzelnen keramischen Partikel oder Agglomerate davon ganz oder teilweise mit einer metallischen Schicht versehen sind.

Natürlich ist es auch möglich, das keramische Material und die metallische Komponente getrennt voneinander und/oder nacheinander in den LPPS-TF Prozess einzubringen.

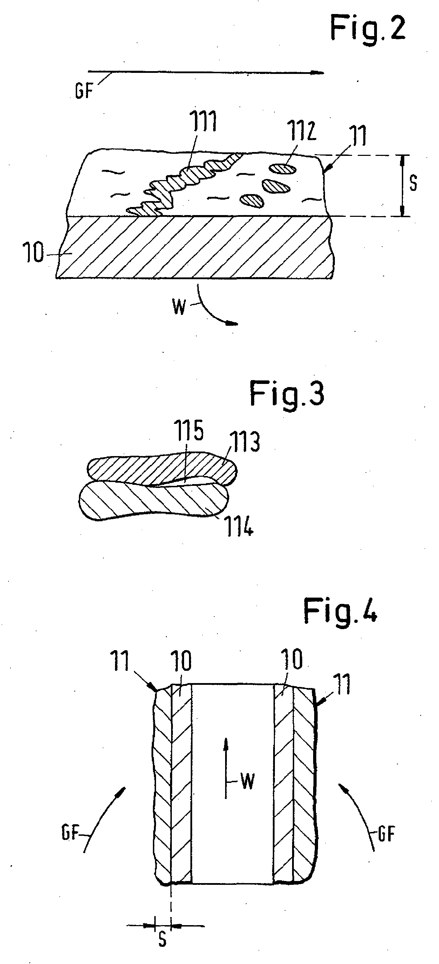

Fig. 2 zeigt in einer schematische Schnittdarstellung ein Ausführungsbeispiel einer erfindungsgemässen wasserstoffpermeablen Membran, die als Schicht 11 auf einem plattenförmigen Substrat 10 aufgebracht ist und die nach einem Ausführungsbeispiel des erfindungsgemässen Verfahrens hergestellt ist. Die Membran weist also zwei Phasen auf, nämlich eine keramische und eine metallische. Diese Materialkombination wird üblicherweise als Cermet bezeichnet. Die Membran weist eine Schichtdicke S auf, die zwischen 5 und 20 µm liegt.

Wie dies in Fig. 2 schematisch angedeutet ist, bildet die metallische Komponente in der Schicht 11 Migrations- oder Sickerpfade 111, 112 aus, welche die Elektronenleitfähigkeit der Schicht 11 deutlich erhöhen. Diese Pfade können sich komplett durch die Schicht 11 hindurchziehen, wie dies der Pfad 111 schematisch zeigt. Es ist aber auch möglich, wie dies der Pfad 112 zeigt, dass diese Pfade nicht durchgängig sind, also sich nicht komplett vom Substrat 10 bis zu der Oberfläche der Schicht 11, welche dem Substrat abgewandt ist, erstrecken. Auch solche nicht durchgängigen Pfade erhöhen die Elektronenleitfähigkeit der Schicht 11 bzw. der Membrane.

Wie bereits erwähnt, lassen sich mit dem erfindungsgemässen Verfahren sehr dichte Schichten 11 erzeugen. Dies veranschaulicht Fig. 3, die eine schematische Darstellung zweier benachbarter Spritzer (Splats) 113, 114 in der Schicht 11 aus Fig. 2 zeigt. Insbesondere durch eine hohe spezifische Enthalpie des Plasmas erhalten die Materialpartikel im Prozessstrahl 2 eine sehr hohe kinetische und thermische Energie. Die spezifische Enthalpie des Plasmas kann beispielsweise im Prozessdruckbereich unterhalb 1000 Pa im Bereich von 10'000 bis 15'000 kJ/kg liegen und im Prozessdruckbereich von 10'000 Pa bei 3'000 bis 4'000 kJ/K. Durch die hohe kinetische und thermische Energie der Partikel werden die Kontaktflächen zwischen benachbarten Spritzern 113,114 deutlich erhöht. Wie dies Fig. 3 zeigt, berühren sich benachbarte Spritzer 113,114 typischerweise nicht über den gesamten Bereich ihrer einander zugewandten Oberflächen, sondern es kommt zur Ausbildung von Grenzflächenhohlräumen 115 zwischen benachbarten Spritzern 113,114. Bei konventionellen thermischen Spritzprozessen liegt der Anteil der Kontaktfläche, mit der sich benachbarte Spritzer berühren, üblicherweise bei etwa 30% der einander zugewandten Oberflächen benachbarter Spritzer, d.h. etwa 70% der Oberfläche benachbarter Spritzer begrenzen oder bilden Grenzflächenhohlräume 115. Mit dem erfindungsgemässen Verfahren ist es möglich, diese Grenzflächenhohlräume 115 deutlich zu reduzieren, beziehungsweise die Kontaktfläche, mit der sich benachbarte Spritzer 113, 114 berühren deutlich zu erhöhen. Der Anteil der Kontaktfläche zwischen benachbarten Spritzern 113,114 beträgt bei dem erfindungsgemässen Verfahren bzw. den damit hergestellten Schichten 11 beispielsweise mindestens 50% der einander zugewandten Oberflächen der benachbarten Spritzer 113,114 und vorzugsweise mindestens 70%.

Um den Anteil der Kontaktfläche noch zu vergrössern, kann es vorteilhaft sein, die Schicht 11 bzw. die Membrane nach ihrer Herstellung, vorzugsweise bei 800°C bis 1200°C zu sintern. Hiermit lässt sich ein nachträgliches Verdichten und ein Eliminieren von Fehlern erreichen.

Das Substrat 10 (siehe Fig. 2), auf welches die Schicht 11 aufgebracht ist, kann beispielsweise auch ein keramisches Material sein. Das Substrat 10 besteht aus einem porösen Material, das im Wesentlichen vollkommen gasdurchlässig ist, das eine genügende mechanische Stabilität aufweist und das auch Prozesstemperaturen von 650°C bis 1000°C aushalten kann. Ferner kann das Substrat 10 Druckdifferenzen von einigen zehn bar (einige MPa), beispielsweise 30 MPa aushalten. Dies ist vorteilhaft, weil der diffusionsbasierte Transport des Wasserstoffs durch die metallische Komponente der Membran, durch die Druckdifferenz bzw. die Partialdruckdifferenz über die Membrane angetrieben wird.

Im Betriebszustand strömt das Gasgemisch (Pfeil GF in Fig. 2), aus welchem der Wasserstoff zu extrahieren ist auf der einen Seite der Membran. Nur der in dem Gasgemisch GF enthaltene Wasserstoff kann die Membran durchdringen, wie dies der Pfeil W andeutet, und kann auf der anderen Seite der Membran abgeführt werden. Je nach Prozess kann es dabei vorteilhaft sein, wenn das Gasgemisch GF unter einem erhöhten Druck strömt.

Die hohe selektive Permeabilität für Wasserstoff beruht auf der hohen Protonenleitfähigkeit des keramischen Materials und auf der Wasserstoffdiffusion, welche durch die metallische Komponente ermöglicht wird. Mit der erfindungsgemässen wasserstoffpermeablen Membran können beispielsweise bei einer Schichtdicke S von 5 bis 20 µm Durchflussraten für den Wasserstoff von mindestens 10 Milliliter pro Minute und Quadratzentimeter erreicht werden.

Im Vergleich zu einphasigen Strukturen, die nur aus einem protonenleitfähigen Oxid vom Perowskit-Typ bestehen ist die Protonenleitfähigkeit der zweiphasigen Struktur wesentlich höher, was aus der elektronischen Leitfähigkeit der metallischen Phase resultiert.

In Fig. 4 ist ein Ausführungsbeispiel einer erfindungsgemässen wasserstoffpermeablen Membran in einer schematische Schnittdarstellung gezeigt, wobei die Membran auf einem auf einem rohrförmigen Substrat vorgesehen ist. Ansonsten gelten die Erläuterungen zur Fig. 2 in sinngemäss gleicher Weise. Die die Membran bildende Schicht 11 mit der dichten Struktur ist auf der Aussenseite des rohrförmigen Substrats vorgesehen, um eine möglichst grosse Fläche für die Membrane zur Verfügung zu haben. Das Gasgemisch GF wird vorzugsweise von aussen und unter Druck an das rohrförmige Substrat 10 mit der Schicht 11 herangeführt. Der Wasserstoff durchdringt die Membran und kann im Innern des rohrförmigen Substrats abgeführt werden, wie dies der Pfeil W andeutet.

Es ist beispielsweise auch möglich, mehrere solcher rohrförmigen Substrate 10, die jeweils mit einer wasserstoffpermeablen Membran versehen sind, in einer Prozesskammer anzuordnen, die dann mit dem Gasgemisch GF gefüllt und unter Druck gesetzt wird. Der extrahierte Wasserstoff kann dann durch das Innere der rohrförmigen Substrate abgeführt werden.

Ferner ist es möglich die Oberfläche der Schicht 11 in an sich bekannter Weise gezielt zu modifizieren, um eine katalytische Wirkung zu erzielen.

Bei der Herstellung der Schicht 11 mittels eines LPPS-TF-Verfahrens wird die spezifische Enthalpie des Plasmas in Abhängigkeit vom Prozessdruck eingestellt.

In einem ersten Beispiel beträgt der Prozessdruck 1.5 mbar (150 Pa), als Plasma-Gas wird ein Argon/Helium-Gemisch verwendet. Der Strom zur Erzeugung des Plasmas beträgt 1900-2600 A. Der Gasfluss befindet sich im Überschallbereich bei einer Geschwindigkeit von 2800-3300 m/s (Mach-Zahl 1.5 bis 3). Die Plasmatemperatur beträgt 8'000 K bis 10'000 K. Die spezifische Enthalpie wird auf der Achse der Plasmaflamme gemessen in einer Entfernung von 400 mm bis 1000 mm von der Austrittsdüse 7 der Plasmaspritzvorrichtung 1. Dies entspricht einer typischen Spritzdistanz, in der sich das zu beschichtende Substrat 10 befindet. Die spezifische Enthalpie des Plasmas beträgt 10'000 bis 15'000 kJ/kg. Der lokale Wärmefluss ist mit 2-4 MW/m² verhältnismässig gering. Die Plasmaeigenschaften sind auf der Achse im Bereich von 300 bis 1000 mm Abstand von der Austrittsdüse 7 im Wesentlichen konstant.

In einem zweiten Beispiel beträgt der Prozessdruck 100 mbar (10'000 Pa), als Plasma-Gas wird ein Argon/Helium-Gemisch verwendet. Der Strom zur Erzeugung des Plasmas beträgt 1500-2600 A. Der Gasfluss ist überwiegend unterhalb der Schallgeschwindigkeit bei einer Geschwindigkeit von 200-800 m/s (Mach-Zahl 0.4 bis 0.8). Die Plasmatemperatur beträgt 2'000-4000 K Die spezifische Enthalpie wird auf der Achse der Plasmaflamme gemessen in einer Entfernung von 300 mm bis 400 mm von der Austrittsdüse 7 der Plasmaspritzvorrichtung 1. Dies entspricht einer typischen Spritzdistanz, in der sich das zu beschichtende Substrat 10 befindet. Die spezifische Enthalpie des Plasmas beträgt 3'000 bis 4'000 kJ/kg. Der lokale Wärmefluss ist mit 5 - 16 MW/m² noch gering.Die Plasmaeigenschaften sind entlang der Achse nicht konstant, sie fallen von einem Maximum zu einem Minimum zwischen 300 mm und 400 mm.

In einem dritten Beispiel beträgt der Prozessdruck 1.5 mbar (150 Pa), als Plasma-Gas wird ein Argon/Wasserstoff-Gemisch verwendet. Der Strom zur Erzeugung des Plasmas beträgt 1500 A. Der Gasfluss befindet sich im Überschallbereich bei einer Geschwindigkeit von 3000 m/s (Mach-Zahl 2 bis 3). Die Plasmatemperatur beträgt 8'000 K. Die spezifische Enthalpie wird auf der Achse der Plasmaflamme gemessen in einer Entfernung von 300 mm bis 1000 mm von der Austrittsdüse 7 der Plasmaspritzvorrichtung 1. Dies entspricht einer typischen Spritzdistanz, in der sich das zu beschichtende Substrat 10 befindet. Die spezifische Enthalpie des Plasmas beträgt 15'000 kJ/kg. Der lokale Wärmefluss ist mit 5 MW/m² verhältnismässig gering. Die Plasmaeigenschaften sind auf der Achse im Bereich von 300 bis 1000 mm Abstand von der Austrittsdüse 7 im Wesentlichen konstant.

## Patentansprüche

1. Verfahren zum Herstellen einer wasserstoffpermeablen Membran, welche ein protonenleitendes keramisches Material und eine elektronenleitende metallische Komponente umfasst, **dadurch gekennzeichnet, dass** die Membran mittels Plasmaspritzens als Schicht (11) auf einem Substrat (10) abgeschieden wird, wobei ein Ausgangsmaterial (P) in Form eines Prozessstrahls (2) auf eine Oberfläche des Substrats (10) aufgespritzt wird und wobei das Ausgangsmaterial bei einem niedrigen Prozessdruck, der höchstens 10 000 Pa ist, in ein den Prozessstrahl defokussierendes Plasma injiziert und dort teilweise oder vollständig geschmolzen wird.

2. Verfahren nach Anspruch, 1 bei welchem die Spritzdistanz zwischen einer Austrittsdüse (7) für den Prozessstrahl (2) und dem Substrat (10) mindestens 200 mm und vorzugsweise mindestens 400 mm beträgt.

3. Verfahren nach Anspruch 1 oder 2, bei welchem das keramische Material ein Oxid vom Perowskit-Typ ist.

4. Verfahren nach Anspruch 3, bei welchem das keramische Material vom Perowskit-Typ die Form ABO₃ hat, wobei A aus der Gruppe gewählt wird, die aus Barium (Ba), Calcium (Ca), Magnesium (Mg) und Strontium (Sr) besteht und B die Form CeₓZr_{y}M_{1-x-y} wobei x und y jeweils kleiner oder gleich 1 und grösser oder gleich Null sind und M aus der Gruppe gewählt wird, die aus Yttrium (Y), Ytterbium (Yb), Europium (Eu), Gadolinium (Gd), Indium (In), Neodym (Nd), Thulium (Tm), Holmium (Ho), Rhodium (Rh), Samarium (Sm), Titan (Ti) und Scandium (Sc) besteht.

5. Verfahren nach einem der vorangehenden Ansprüche, bei welchem die metallische Komponente eines der Metalle Palladium (Pd), Vanadium (V), Niob (Nb), Tantal (Ta) oder Zirconium (Zr) ist, oder eine Legierung mindestens einer dieser Metalle.

6. Verfahren nach einem der vorangehenden Ansprüche, bei welchem der Prozessdruck im Plasmaspritzverfahren mindestens 10 Pa beträgt und vorzugsweise 50 Pa bis 1000 Pa.

7. Verfahren nach einem der vorangehenden Ansprüche, wobei die Gesamtflussrate des Prozessgases beim Plasmaspritzen kleiner als 200 SLPM ist und insbesondere 60 bis 180 SLPM beträgt.

8. Verfahren nach einem der vorangehenden Ansprüche, wobei für den Prozessstrahl (2) eine Zuführrate von 10 bis 200 g/min, vorzugsweise von 40-120 g/min gewählt wird.

9. Wasserstoffpermeable Membran, welche ein protonenleitendes keramisches Material und eine elektronenleitende metallische Komponente umfasst, und mittels Plasmaspritzens als Schicht (11) auf einem Substrat (10) abgeschieden wird, wobei ein Ausgangsmaterial (P) in Form eines Prozessstrahls (2) auf eine Oberfläche des Substrats (10) aufgespritzt wird und das Ausgangsmaterial bei einem niedrigen Prozessdruck, der höchstens 10 000 Pa ist, in ein den Prozessstrahl defokussierendes Plasma injiziert und dort teilweise oder vollständig geschmolzen wird, **dadurch gekennzeichnet, dass** eine Schichtdicke (S) der Schicht (11) zwischen 5 und 20 µm liegt.

10. Substrat mit einer wasserstoffpermeablen Membran gemäss Anspruch 9.

11. Substrat nach Anspruch 10,
**dadurch gekennzeichnet, dass**
das Substrat (10) plattenförmig oder rohrförmig ausgestaltet ist.

## Claims

1. A method for the manufacture of a hydrogen-permeable membrane, which includes a proton-conducting ceramic material and an electron-conducting metallic component, **characterised in that** the membrane is deposited as a layer (11) on a substrate (10) by means of plasma spraying, wherein a starting material (P) is sprayed onto a surface of the substrate (10) in the form of a process beam (2) and wherein the starting material is injected into a plasma at a low process pressure, which is at most 10 000 Pa, said plasma defocussing the process beam, and said starting material being melted partly or completely there.

2. A method in accordance with claim 1, in which the spraying distance between an outlet nozzle (7) for the process beam (2) and the substrate (10) amounts to at least 200 mm and preferably to at least 400 mm.

3. A method in accordance with claim 1 or claim 2 in which the ceramic material is an oxide of the perovskite type.

4. A method in accordance with claim 3, in which the ceramic material of the perovskite type has the form ABO₃, wherein A is selected from the group which consists of barium (Ba), Calcium (Ca), magnesium (Mg) and strontium (Sr) and B has the form CeₓZr_{y}M_{1-x-y}, wherein x and y are respectively smaller than or equal to 1 and larger than or equal to zero and M is selected from the group which consists of yttrium (Y), ytterbium (Yb), europium (Eu), gadolinium (Gd), indium (In), neodymium (Nd), thulium (Tm), holmium (Ho), rhodium (Rh), samarium (Sm), titanium (Ti) and scandium (Sc).

5. A method in accordance with any one of the previous claims in which the metallic component is or one of the metals palladium (Pd), vanadium (V), niobium (Nb), tantalum (Ta) or zirconium (Zr) or an alloy of at least one of these metals.

6. A method in accordance with any one of the previous claims in which the process pressure in the plasma spraying method amounts to at least 10 Pa and preferably to 50 Pa to 1000 Pa.

7. A method in accordance with any one of the previous claims wherein the total flow rate of the process gas during plasma spraying is smaller than 200 SLPM and in particular amounts to 60 to 180 SLPM.

8. A method in accordance with any one of the previous claims wherein a supply rate of 10 to 200 g/min, preferably of 40-120 g/min is selected for the process beam (2).

9. A hydrogen permeable membrane comprising a proton-conducting ceramic material and an electron-conducting metallic component and which is deposited as a layer (11) on a substrate (10) by means of plasma spraying, wherein a starting material (P) is sprayed onto a surface of the substrate (10) in the form of a process beam (2) and wherein the starting material is injected into a plasma at a low process pressure, which is at most 10 000 Pa, said plasma defocussing the process beam, and said starting material being melted partly or completely there, **characterized in that** a layer thickness (S) of the layer (11) lies between 5 and 20 µm.

10. A substrate having a hydrogen-permeable membrane in accordance with claim 9.

11. A substrate in accordance with claim 10, wherein the substrate (10) is made plate-shaped or tubular.

## Revendications

1. Procédé de fabrication d'une membrane perméable à l'hydrogène, qui comprend un matériau céramique conducteur de protons et un composant métallique conducteur d'électrons, **caractérisé en ce que** la membrane est, par pulvérisation par plasma, déposée sous forme d'une couche (11) sur un substrat (10), un matériau de départ (P) sous forme d'un faisceau de procédé (2) étant pulvérisé sur une surface du substrat (10), et le matériau de départ étant, sous une faible pression de procédé, qui est au plus de 10000 Pa, injecté dans un plasma assurant la défocalisation du faisceau de procédé, et y subissant une fusion partielle ou complète.

2. Procédé selon la revendication 1, dans lequel la distance de pulvérisation entre une buse de sortie (7) pour le faisceau de procédé (2) et le substrat (10) est d'au moins 200 mm et de préférence d'au moins 400 mm.

3. Procédé selon la revendication 1 ou 2, dans lequel le matériau céramique est un oxyde du type pérowskite.

4. Procédé selon la revendication 3, dans lequel le matériau céramique du type pérowskite a la forme ABO₃, A étant choisi dans le groupe constitué du baryum (Ba), du calcium (Ca), du magnésium (Mg) et du strontium (Sr), et B ayant la forme CeₓZr_{y}M_{1-x-y}, où x et y sont chacun inférieurs ou égaux à 1 et supérieurs ou égaux a zéro, et M est choisi dans le groupe qui est constitué de l'yttrium (Y), de l'ytterbium (Yb), de l'europium (Eu), du gadolinium (Gd), de l'indium (In), du néodyme (Nd), du thulium (Tm), du holmium (Ho), du rhodium (Rh), du samarium (Sm), du titane (Ti) et du scandium (Sc).

5. Procédé selon l'une des revendications précédentes, dans lequel le composant métallique est l'un des métaux palladium (Pd), vanadium (V), niobium (Nb), tantale (Ta) ou zirconium (Zr), ou un alliage d'au moins l'un de ces métaux.

6. Procédé selon l'une des revendications précédentes, dans lequel la pression de procédé, dans le procédé de pulvérisation par plasma, est d'au moins 10 Pa et est de préférence de 50 à 1000 Pa.

7. Procédé selon l'une des revendications précédentes, dans lequel le débit total du gaz de procédé lors de la pulvérisation par plasma est inférieur à 200 Nl/min, et en particulier est de 60 à 180 Nl/min.

8. Procédé selon l'une des revendications précédentes, dans lequel, pour le faisceau de procédé (2), on choisit un débit d'amenée de 10 à 200 g/min, de préférence de 40 à 120 g/min.

9. Membrane perméable à l'hydrogène, qui comprend un matériau céramique conducteur de protons et un composant métallique conducteur d'électrons, et est déposé par pulvérisation par plasma sous forme d'une couche (11) sur un substrat (10), un matériau de départ (P) sous forme d'un faisceau de procédé (2) étant pulvérisé sur une surface du substrat (10), et le matériau de départ étant, sous une faible pression de procédé, qui est au plus de 10 000 Pa, injecté dans un plasma assurant la défocalisation du faisceau de procédé, et y subissant une fusion partielle ou complète, **caractérisée en ce que** l'épaisseur (S) de la couche (11) est comprise entre 5 et 20 µm.

10. Substrat comportant une membrane perméable à l'hydrogène selon la revendication 9.

11. Substrat selon la revendication 10, **caractérisé en ce que** le substrat (10) est configuré sous forme d'une plaque ou d'un tube.
